# EUROPÄISCHE PATENTSCHRIFT

(11) **EP 2 014 943 B1**
(45) Veröffentlichungstag und Bekanntmachung des Hinweises auf die Patenterteilung: **10.03.2010**
(21) Anmeldenummer: 08008095.5
(22) Anmeldetag: 28.04.2008
(51) Int. Cl.: F16D 13/68

(54) **Kupplung, vzw. Doppelkupplung für ein Kraftfahrzeug**
Coupling or double coupling for a motor vehicle
Embrayage, de préférence embrayage double pour un véhicule automobile

(30) Priorität: 10.07.2007 DE 102007031963
(43) Veröffentlichungstag der Anmeldung: 14.01.2009
(73) Patentinhaber: Volkswagen Aktiengesellschaft, 38436 Wolfsburg (DE)
(72) Erfinder: Plogmann, Jörg, 34560 Fritzlar (DE); Schmidt, Andreas Dr., 32602 Vlotho (DE); Kolze, Fabian, 38448 Wolfsburg (DE); Albrecht, Edmund, 38527 Meine (DE)

(56) Entgegenhaltungen:
- EP-A- 1 371 867
- WO-A-91/14878
- WO-A-2004/065809
- DE-A1-102004 057 158

## Beschreibung

Die Erfindung betrifft eine Kupplung, insbesondere für ein Getriebe eines Kraftfahrzeuges, vzw. eine Doppelkupplung für ein automatisches oder automatisiertes Doppelkupplungsgetriebe, mit mindestens einer Reibkupplung, wobei die Reibkupplung einerseits mit einer Motorwelle und andererseits mit einer Getriebeeingangswelle verbindbar oder verbunden ist, mit mindestens einem Lamellenträger und mit einer mit dem Lamellenträger im drehfesten Eingriff stehenden Mitnehmerscheibe, wobei der Lamellenträger eine Ringnut aufweist und die Mitnehmerscheibe durch einen in die Ringnut eingreifenden Sicherungsring am Lamellenträger gesichert ist, und wobei eine Verdrehsicherung den Sicherungsring in der Ringnut gegen Verdrehen sichert.

Doppelkupplungen, insbesondere Doppelkupplungen für Doppelkupplungsgetriebe, teilen das zu übertragende Drehmoment auf, nämlich insbesondere auf zwei verschiedene Getriebeeingangswellen eines Doppelkupplungsgetriebes. Die vzw. mit der ersten Gangstufe der ersten Eingangswelle verbindbare oder verbundene, erste Reibkupplung ist im Allgemeinen die thermisch höher belastete Reibkupplung, weil diese Reibkupplung während des Anfahrens hier besonders entstehende Wärme abführen muss. Der Kraftfluss wird zwischen der Motorwelle und vzw. zwei nasslaufenden Reibkupplungen vzw. über ein Kupplungsgehäuse übertragen. Das Kupplungsgehäuse weist einen als Lamellenträger ausgebildeten Gehäusetopf und eine mit dem Gehäusetopf bzw. Lamellenträger im drehfesten Eingriff stehende Mitnehmerscheibe auf. Die Mitnehmerscheibe ist vzw. drehfest mit der Kupplungseingangswelle verbunden.

Aus der EP 1 422 430 B1 ist eine Kupplung mit einem topfförmigen Lamellenträger bekannt, wobei der Lamellenträger mit einer Mitnehmerscheibe im drehfesten Eingriff steht. Der Lamellenträger weist dabei einen sich im Wesentlichen in Radialrichtung erstreckenden Bereich und einen sich im Wesentlichen in Axialrichtung erstreckenden Bereich auf. Am Innenumfang des axialen Bereichs sind Außenlamellen angeordnet. Der axiale Bereich weist sich in Axialrichtung erstreckende Axialnuten auf. Die Axialnuten sind zur Stirnseite des axialen Bereichs offen ausgebildet. Die Mitnehmerscheibe weist an ihrem Außenumfang Zähne auf, wobei die Zähne in die Axialnuten eingreifen. Die Mitnehmerscheibe ist am axialen Bereich durch einen Sicherungsring gegen axiales Verschieben gesichert. Der Sicherungsring ist als Ringsegment ausgeführt und greift in eine Ringnut am Innenumfang des axialen Bereiches des Lamellenträgers ein. Bspw. durch Drehschwingungseinleitung vom Motor besteht die Möglichkeit, dass sich der Sicherungsring in der Ringnut verdreht. Hierdurch könnte der Sicherungsring aus der Ringnut springen, was unter Umständen dem Betrieb an der Kupplung beeinträchtigen und zu einem erhöhten Wartungs- und Arbeitsaufwand führen kann.

Aus der DE 10 2004 057 158 A1 ist eine Kupplung bekannt, die als Lamellenkupplung ausgebildet ist. Ein Lamellenträger weist dabei an einem Zylinderabschnitt über den Umfang verteilt, wechselweise Axialnuten und Axialstege auf. Der Lamellenträger steht über eine Mitnehmerscheibe mit einer Nabe in Verbindung. Zur Übertragung eines Drehmoments besteht zwischen der Mitnehmerscheibe und dem Lamellenträger eine Steckverzahnung. Dazu greift die Mitnehmerscheibe mit Zähnen in korrespondierende axiale Ausnehmungen des Lamellenträgers. Die Mitnehmerscheibe ist durch einen Eingriff eines Sicherungsrings in Lagervertiefungen der Mitnehmerscheibe in Axialrichtung festgelegt. Der Sicherungsring ist als gewellter Federring ausgebildet ist. Dieser gewellte Federring greift im montierten Zustand mit seinen radial äußeren Wellenbergen in die Lagervertiefungen. Mit seinen radial inneren Wellenbergen ist der Federring an der Mitnehmerscheibe abgestützt. Um den Federring gegen Verdrehen zu sichern, weist der Federring im Bereich der äußeren Wellenberge gewölbte Einbuchtungen auf, wobei die äußeren Wellenberge mit den Einbuchtungen in die entsprechend angepassten Lagervertiefungen des Lamellenträgers eingreifen.

Da die Mitnehmerscheibe das Drehmoment von der Motorwelle überträgt, wird die Mitnehmerscheibe und der Sicherungsring im Betrieb belastet, wodurch sich der Sicherungsring auch leicht verformen kann, was zu einem Spiel des Sicherungsring in der Ringnut bzw. den Lagervertiefungen führen kann. Insbesondere durch Drehungleichförmigkeiten des Verbrennungsmotors kann der Sicherungsring auch Schwingungen ausgesetzt sein. Dadurch könnte der Sicherungsring zu wandern beginnen oder ggf. aus der Ringnut herausspringen, was zu einem hohen Wartungsaufwand mit den damit verbundenen Kosten führt.

Dokument WO 91/14878 offenbart auch eine Reibungskupplung mit einem Lamellenträger.

Der Erfindung liegt daher die Aufgabe zugrunde, eine Kupplung derart auszugestalten und weiterzubilden, so dass die Zuverlässigkeit der Kupplung erhöht wird, wobei ein einfach herstellbarer und montierbarer Sicherungsring einsetzbar ist und der Sicherungsring auf einfache Weise sicherbar ist, so dass der Arbeits- und Wartungsaufwand wesentlich verringert ist.

Die zuvor aufgezeigte Aufgabe wird nun dadurch gelöst, dass als Verdrehsicherung ein separates Haltebauteil vorgesehen ist und das Haltebauteil derart ausgebildet und/oder angeordnet ist, so dass der Sicherungsring gegen radiales Ausrücken aus der Ringnut und/oder gegen eine Verdrehung in Umfangsrichtung in der Ringnut 9 gesichert ist. Ein besonderer Vorteil der Erfindung ist, was die folgenden Ausführungen noch zeigen werden, dass der Sicherungsring vzw. in zwei Richtungen durch das Haltebauteil gesichert ist, nämlich in Umfangsrichtung und zusätzlich in Radialrichtung. Dadurch wird verhindert, dass der Sicherungsring zu wandern beginnt und aus der Ringnut herausspringt. Da der Sicherungsring durch ein separat ausgebildetes Haltebauteil gesichert ist, kann ein einfach herzustellender Sicherungsring verwendet werden. Insbesondere kann der Sicherungsring aus einem Ringsegment mit einer Ringöffnung bestehen, wobei die Ringöffnung durch gegenüberliegende, in Umfangsrichtung weisende Stirnseiten des Ringsegments begrenzt ist. Der Sicherungsring ist vzw. nicht gewellt, sondern plan ausgebildet, d.h. der Sicherungsring kann flächig bzw. eben ausgebildet werden, wodurch der Sicherungsring kostengünstig herstellbar und einfach montierbar ist. Vzw. ist die Mitnehmerscheibe durch eine Steckverzahnung mit dem Lamellenträger verbunden. Der Lamellenträger kann insbesondere als Außenlamellenträger ausgebildet sein, wobei am Innenumfang des Lamellenträgers Außenlamellen angeordnet sind. Der Lamellenträger kann Axialnuten aufweisen, wobei die Mitnehmerscheibe dann in die Axialnuten eingreifende Zähne aufweisen kann. Vzw. ist der Sicherungsring nun so angeordnet, dass die Ringöffnung in Radialrichtung fluchtend zur Axialnut des Lamellenträgers angeordnet ist. Das Haltebauteil greift vzw. in die Axialnut und die Ringöffnung ein, um den Sicherungsring gegen ein Verdrehen zu sichern. Zusätzlich stützt das Haltebauteil den Sicherungsring vzw. an seinem Innenumfang ab, um den Sicherungsring in Radialrichtung zu sichern. Dadurch kann der Sicherungsring nicht gestaucht werden. Ein Herausspringen des Sicherungsrings aus der Ringnut ist somit verhindert. Die eingangs beschriebenen Nachteile sind daher vermieden und entsprechende Vorteile sind erzielt.

Es gibt nun eine Vielzahl von Möglichkeiten, die erfindungsgemäße Kupplung in vorteilhafter Art und Weise auszugestalten und weiterzubilden. Hierfür darf zunächst auf die dem Patentanspruch 1 nachgeordneten Patentansprüche verwiesen werden. Im Folgenden wird nun eine bevorzugte Ausführungsform der Erfindung anhand der folgenden Zeichnung und der zugehörigen Beschreibung näher erläutert. In der Zeichnung zeigt:
- Fig. 1: eine Doppelkupplung in der bevorzugten Ausführungsform in einer schematischen, perspektivischen Darstellung,
- Fig. 2: in einer schematischen, perspektivischen Detaildarstellung die Doppelkupplung aus Fig. 1,
- Fig. 3: in einer anderen schematischen, perspektivischen Detaildarstellung die Doppelkupplung aus Fig. 1 und 2,
- Fig. 4: zeigt in schematischer Darstellung die Anordnung des Haltebauteils in einer Doppelkupplung in einer geschnittenen schematischen Darstellung, und
- Fig. 5a bis 5c: das erfindungsgemäße Haltebauteil in schematischer, teilweise unterschiedlicher perspektivischer Darstellung.

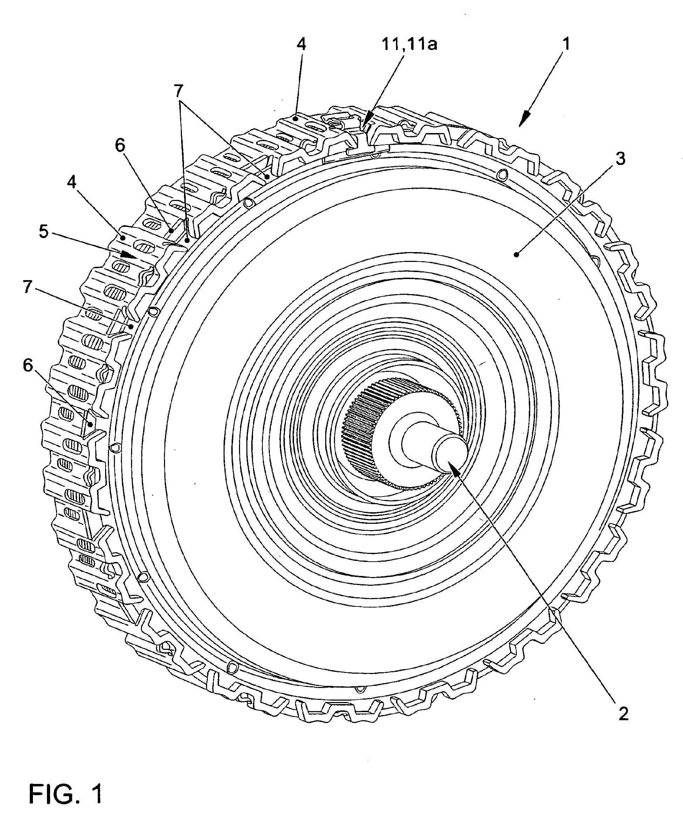

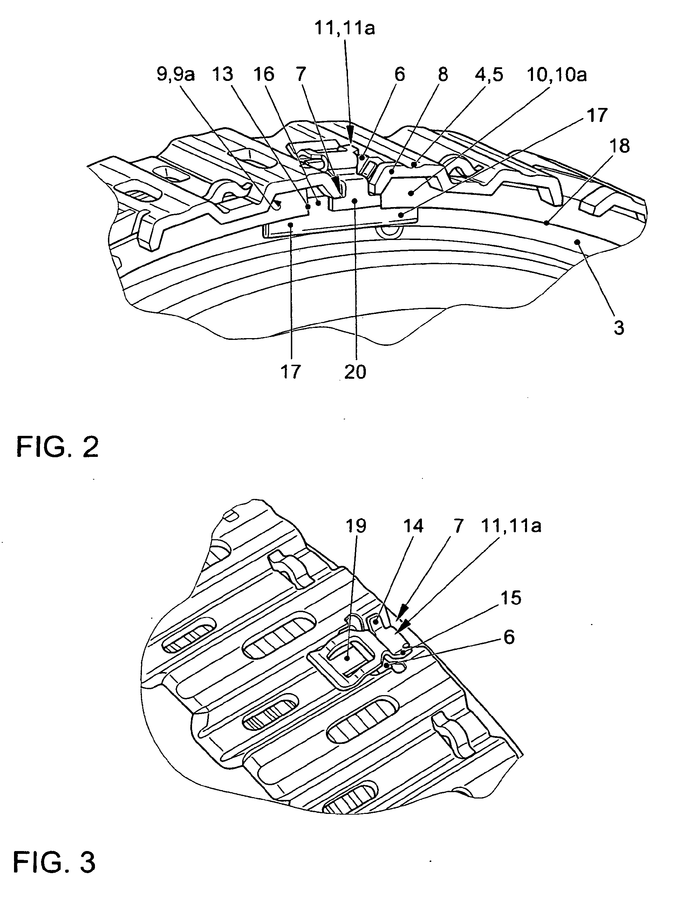

Die in Fig. 1, 2 und 3 dargestellte Doppelkupplung 1 wird insbesondere für ein Getriebe eines Kraftfahrzeuges verwendet, nämlich vzw. für ein automatisches oder automatisiertes, hier allerdings nicht im Einzelnen dargestelltes Doppelkupplungsgetriebe.

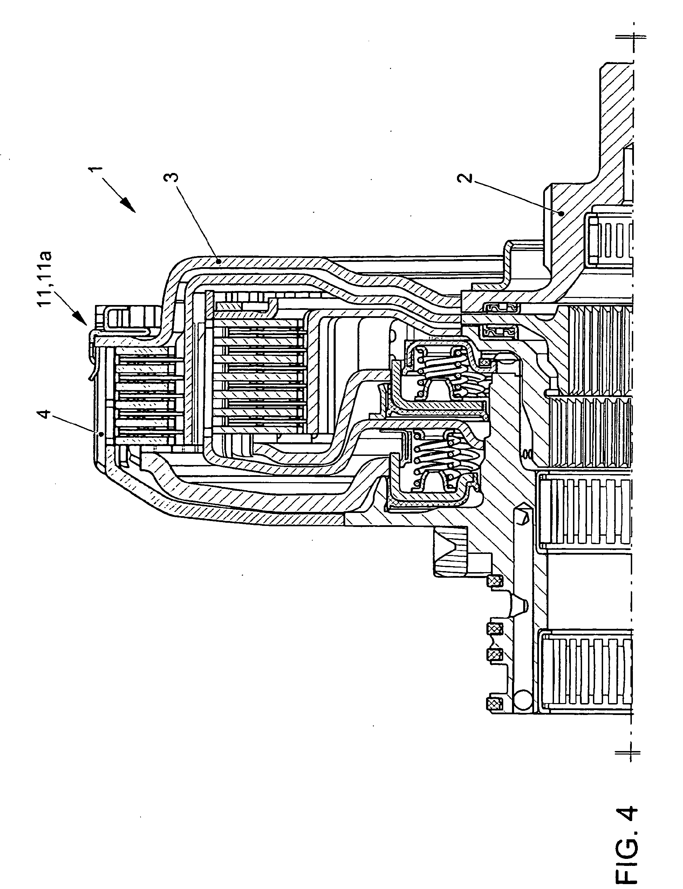

Die Doppelkupplung 1 weist eine nicht im einzelnen näher bezeichnete erste, äußere Reibkupplung und eine nicht näher bezeichnete, zweite Reibkupplung auf. Erkennbar in Fig. 1, Fig. 2 und Fig. 4 ist einerseits rechts unten eine Kupplungseingangswelle 2, die wiederum mit einer Motorwelle entsprechend verbindbar ist. Andererseits sind die erste und zweite Reibkupplung mit jeweils einer in Fig. 4 nicht näher bezeichneten Getriebeeingangswelle vzw. eines Doppelkupplungsgetriebes verbindbar.

Der Kraftfluss wird von der Kupplungseingangswelle 2 über eine Mitnehmerscheibe 3 auf einen Außenlamellenträger 4 übertragen. Der Mitnehmerscheibe 3 und der Außenlamellenträger 4 bilden ein nicht näher bezeichnetes Kupplungsgehäuse, in dem die beiden Reibkupplungen aufgenommen sind.

Der Außenlamellenträger 4 ist im Wesentlichen topfförmig ausgebildet, wobei der Außenlamellenträger 4 einen sich im Wesentlichen in Radialrichtung erstreckenden Bereich (in Fig. 1 verdeckt bzw. nicht dargestellt) und einen sich im Wesentlichen in Axialrichtung erstreckenden Bereich 5 aufweist. Der Außenlamellenträger 4 steht mit der sich im Wesentlichen in Radialrichtung erstreckenden Mitnehmerscheibe 3 im drehfesten Eingriff. Die Mitnehmerscheibe 3 ist dabei in Radialrichtung innen drehfest mit der Kupplungseingangswelle 2 verbunden. Die Mitnehmerscheibe 3 weist in Radialrichtung außen Zähne 6 auf. Der Lamellenträger weist vzw. mehrere Axialnuten 7 auf, wobei die Zähne 6 in die Axialnuten 7 des Außenlamellenträgers 4 greifen. Die Zähne 6 sind vzw. schwalbenschwanz-förmig ausgebildet, wobei die Axialnuten 7 sich entsprechend in Radialrichtung nach außen erweitern. Die Axialnuten 7 erstrecken sich im Wesentlichen in Axialrichtung und sind zur Stirnseite 8 des axialen Bereiches 5 offen ausgebildet.

Der Außenlamellenträger 4 ist vzw. als Blechumformteil ausgestaltet, wobei der Außenlamellenträger an seinem axialen Bereich 5 (Kronenbereich) radial nach innen und radial nach außen gewölbte, nicht näher bezeichnete Bereiche aufweisen kann. Der Außenlamellenträger 4 weist eine Ringnut 9 auf, wobei in der Ringnut 9 ein Sicherungsring 10 angeordnet ist. Die Ringnut 9 besteht vzw. aus mehreren, beabstandeten Ringnutabschnitten 9a, d.h. die Ringnut 9 ist abschnittsweise unterbrochen. Die Ringnutabschnitte 9a sind vzw. an den radial nach innen gewölbten Bereichen ausgebildet. Die Mitnehmerscheibe 3 ist durch den in die Ringnut 9 eingreifenden Sicherungsring 10 am Außenlamellenträger 4 gegen axiales Verschieben und Ausrücken aus den stirnseitig offenen Axialnuten 7 gesichert.

Da die Mitnehmerscheibe 3 das Drehmoment von der Motorwelle bzw. der Kupplungseingangswelle 2 überträgt, wird die Mitnehmerscheibe 3 und der Sicherungsring 10 im Betrieb belastet, wodurch sich der Sicherungsring 10 bspw. leicht verformen könnte, was zu einem Spiel des Sicherungsring 10 in der Ringnut 9 führen könnte. Insbesondere durch Drehungleichförmigkeiten eines nicht dargestellten Verbrennungsmotors kann der Sicherungsring 10 Schwingungen ausgesetzt sein. Dadurch könnte der Sicherungsring 10 zu wandern beginnen und aus der Ringnut 9 herausspringen.

Die zuvor genannten Nachteile werden nun dadurch vermieden, dass als Verdrehsicherung ein separates Haltebauteil 11 vorgesehen ist und das Haltebauteil 11 zusätzlich derart ausgebildet und/oder angeordnet ist, so dass der Sicherungsring 10 gegen radiales Ausrücken aus der Ringnut 9 und/oder gegen eine Verdrehung in Umfangsrichtung gesichert ist. Von besonderem Vorteil ist, dass der Sicherungsring 10 in zwei Richtungen durch das Haltebauteil 11 gesichert ist, nämlich in Umfangsrichtung und zusätzlich in Radialrichtung. Dadurch wird verhindert, dass der Sicherungsring 10 zu wandern beginnt oder ggf. aus der Ringnut 9 herausspringt.

Da der Sicherungsring 10 durch das separat ausgebildete Haltebauteil 11 gesichert ist, kann ein einfach herzustellender Sicherungsring 10 verwendet werden. Insbesondere kann der Sicherungsring 10 aus einem Ringsegment 10a mit einer Ringöffnung 12 bestehen, wobei die Ringöffnung 12 durch gegenüberliegende, in Umfangsrichtung weisende Stirnseiten 13 des Ringsegments 10a in Umfangsrichtung begrenzt ist. Der Sicherungsring 10 ist vzw. nicht gewellt, sondern plan ausgebildet, d.h. der Sicherungsring 10 kann flächig bzw. eben ausgebildet werden, wodurch der Sicherungsring 10 kostengünstig herstellbar und einfach montierbar ist.

Vzw. ist der Sicherungsring 10 so angeordnet, dass die Ringöffnung 12 in Radialrichtung fluchtend zur Axialnut 7 des Außenlamellenträgers 4 angeordnet ist. Das Ringsegment 10a ist so angeordnet, dass zwischen den Stirnseiten 13 des Ringsegments 10a in Radialrichtung also der Ringöffnung 12 außerhalb die Axialnut 7 des Außenlamellenträgers 4 gegenüberliegend angeordnet ist.

Das Haltebauteil 11 ist vzw. einstückig und insbesondere als Haltefeder 11a ausgebildet, kann aber auch aus mehreren, eine Baueinheit bildende Bauelemente zusammengesetzt sein. Das Haltebauteil 11 ist hier im Wesentlichen L-förmig ausgebildet, wobei das Haltebauteil 11 vzw. sich zum einen in axialer Richtung und zum anderen in Radialrichtung erstrecken kann. Das Haltebauteil 11 ist zum einen am Lamellenträger 4 und/oder an der Mitnehmerscheibe 3 festgelegt und stützt zum anderen den Sicherungsring 10 in Radialrichtung und in Umfangsrichtung ab. Das Haltebauteil 11 greift dabei in die Axialnut 7 des Lamellenträgers 4 ein, wodurch das Haltebauteil 11 in Umfangsrichtung im Wesentlichen festgelegt ist. Das Haltebauteil 11 weist ferner einen zwischen die Stirnseiten 13 des Sicherungsrings 10 ragenden Haltebereich 16 auf. Der Haltebereich 16 erstreckt sich im Wesentlichen in der Ebene des Sicherungsrings 10. Der Haltebereich 16 des Haltebauteils 11 ist an den Abstand der Stirnseiten 13 bzw. die Größe der Ringöffnung 12 angepasst. Der Haltebereich 16 erstreckt sich dabei in Umfangsrichtung im Wesentlichen von der einen Stirnseite 13 bis zur anderen Stirnseite 13 der Ringöffnung 12 des Ringsegments 10a. Die Ringöffnung 12 ist vzw. durch den Haltebereich 16 ausgefüllt. Dadurch bildet das Haltebauteil 11 eine Verdrehsicherung für den Sicherungsring 10 in Umfangsrichtung.

Das Ringsegment 10a kann zur einfacheren Montage an den Stirnseiten 13 mit einer nicht dargestellten Fase versehen sein, wodurch das Ringsegment 10a leichter in die Ringnutabschnitte 9a eintauchen kann und dadurch leichter in Umfangsrichtung ausrichtbar ist bevor das Haltebauteil 11 montiert wird.

Das vzw. einstückig ausgebildete Haltebauteil 11 weist ferner einen Stützbereich 17 auf, wobei der Stützbereich 17 den Sicherungsring 10 an seinem Innenumfang 18 abstützt. Der Stützbereich 17 ragt in Umfangsrichtung über den Haltebereich 16 hinaus, so dass der Stützbereich 17 den Sicherungsring 10 an seinem Innenumfang 18 hinter den Stirnseiten 13 abstützt. Dadurch wird verhindert, dass der Sicherungsring 10 seinen Montagedurchmesser unterschreitet und in Radialrichtung aus der Ringnut 10 wandert.

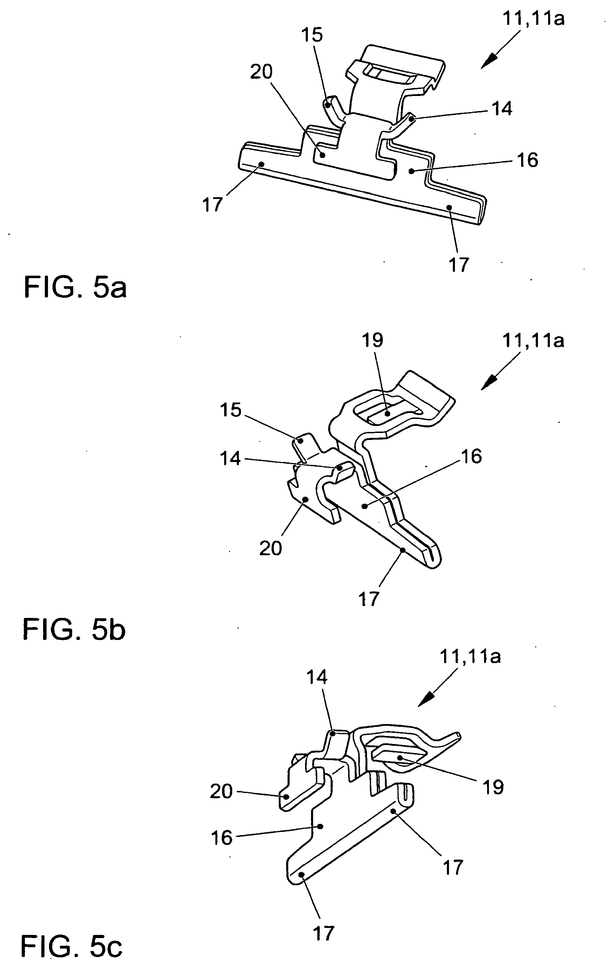

Vzw. ist das Haltebauteil 11 so angepasst, dass das Haltebauteil 11 in die Axialnut 7 des Außenlamellenträgers 4 in Axialrichtung einschiebbar ist. Weiter vzw. ist das Haltebauteil 11 am Außenlamellenträger 4 festgelegt. Vzw. ist das Haltebauteil 11 derart federnd ausgestaltet, dass es in die Axialnut 7 einclipsbar ist. Das Haltebauteil 11 kann eine entsprechende Federsteifigkeit aufweisen, so dass das Haltebauteil 11 als Haltefeder 11a ausgebildet ist, um den Sicherungsring 10 federnd zu fixieren. Das Haltebauteil 11 ist vzw. an den Querschnitt der sich vorzugsweise nach radial außen erweiterten Axialnut 7 angepasst. Dazu weist das Haltebauteil hier zwei V-förmig auseinander stehende Führungsschenkel 14 und 15 auf. Die Fig. 5a bis 5c zeigen in schematischer Darstellung das als Haltefeder 11a ausgebildete Haltebauteil 11.

Das Haltebauteil 11 ist gegen axiales Verschieben abgestützt, vzw. indem das Haltebauteil 11 am Zahn 6 der Mitnehmerscheibe 3 gegen axiales Verschieben abgestützt ist. Das Haltebauteil 11 weist eine am Zahn 6 der Mitnehmerscheibe 3 eingehakte Lasche 19 auf. Die Lasche 19 ist vzw. federnd ausgebildet und hintergreift den Zahn 6. Wenn das Haltebauteil 11 in Axialrichtung in die Axialnut 7 eingeschoben wird, gleitet die Lasche 19 über den Zahn 6 und rastet anschließend hinter dem Zahn 6 ein, wodurch das Haltebauteil 11 gegen axiales Verschieben in der Axialnut 7 mit der Lasche 19 abgestützt ist. Das Haltebauteil 11 ist daher in die Axialnut 7 einclipsbar.

Ferner weist das Haltebauteil 11 eine Stützlasche 20 auf, wobei die Stützlasche 20 den Lamellenträger 11 an seinem Innenumfang untergreift. Die Stützlasche 20 ist hier T-förmig ausgebildet und ragt in Umfangsrichtung über die Axialnut 7 hinaus und ist daher seitlich der Axialnut 7 am Innenumfang des Lamellenträgers 4 abgestützt. Die Stützlasche 20 erstreckt sich im Wesentlichen in Radialrichtung und parallel zum Haltebereich 16. Die Stützlasche 20 liegt dabei in der Nähe der Stirnseite des axialen Bereichs des Lamellenträgers 4 an diesem an. Durch die vzw. federnd ausgebildete Stützlasche 20 ist das Haltebauteil 11 in Radialrichtung am Außenlamellenträger 4, insbesondere an dessen axialen Bereich 5, festgeklemmt.

### Bezugszeichenliste

- 1: Doppelkupplung
- 2: Kupplungseingangswelle
- 3: Mitnehmerscheibe
- 4: Außenlamellenträger
- 5: axialer Bereich
- 6: Zahn
- 7: Axialnuten
- 8: Stirnseite
- 9: Ringnut
- 9a: Ringnutabschnitt
- 10: Sicherungsring
- 10a: Ringsegment
- 11: Haltebauteil
- 11a: Haltefeder
- 12: Ringöffnung
- 13: Stirnseiten
- 14: Führungsschenkel
- 15: Führungsschenkel
- 16: Haltebereich
- 17: Stützbereich
- 18: Innenumfang
- 19: Lasche
- 20: Stützlasche

## Patentansprüche

1. Kupplung, insbesondere für ein Getriebe eines Kraftfahrzeuges, vzw. Doppelkupplung (1) für ein automatisches oder automatisiertes Doppelkupplungsgetriebe, mit mindestens einer Reibkupplung, wobei die Reibkupplung einerseits mit einer Motorwelle und andererseits mit einer Getriebeeingangswelle verbindbar oder verbunden ist, mit mindestens einem Lamellenträger (4) und mit einer mit dem Lamellenträger (4) im drehfesten Eingriff stehende Mitnehmerscheibe (3), wobei der Lamellenträger (4) eine Ringnut (9) aufweist und die Mitnehmerscheibe (3) durch einen in die Ringnut (9) eingreifenden Sicherungsring (10) am Lamellenträger (4) gesichert ist, und wobei eine Verdrehsicherung den Sicherungsring (10) in der Ringnut (9) gegen Verdrehen sichert, **dadurch gekennzeichnet, dass** als Verdrehsicherung ein separates Haltebauteil (11) vorgesehen ist und das Haltebauteil (11) zusätzlich derart ausgebildet und/oder angeordnet ist, so dass der Sicherungsring (10) gegen radiales Ausrücken aus der Ringnut (9) und/oder gegen eine Verdrehung in Umfangsrichtung in der Ringnut (9) gesichert ist.

2. Kupplung nach Anspruch 1, **dadurch gekennzeichnet, dass** das Haltebauteil (11) einerseits am Lamellenträger (4) und/oder an der Mitnehmerscheibe (3) angeordnet ist und andererseits der Sicherungsring (10) in Radialrichtung und in Umfangsrichtung durch das Haltebauteil (11) abgestützt ist.

3. Kupplung nach Anspruch 1 oder 2, **dadurch gekennzeichnet, dass** der Lamellenträger (4) Axialnuten (7) aufweist und die Mitnehmerscheibe (3) in die Axialnuten (7) eingreifende Zähne (6) aufweist.

4. Kupplung nach einem der vorstehenden Ansprüche, **dadurch gekennzeichnet, dass** der Sicherungsring (10) als Ringsegment (10a) mit mindestens einer Ringöffnung (12) ausgebildet ist.

5. Kupplung nach einem der vorstehenden Ansprüche, **dadurch gekennzeichnet, dass** das Ringsegment (10a) so angeordnet ist, dass die Ringöffnung (12) in Radialrichtung fluchtend zur Axialnut (7) des Lamellenträgers (4) angeordnet ist.

6. Kupplung nach einem der vorstehenden Ansprüche, **dadurch gekennzeichnet, dass** das Haltebauteil (11) in eine der Axialnuten (7) des Lamellenträgers (4) eingreift.

7. Kupplung nach einem der vorstehenden Ansprüche, **dadurch gekennzeichnet, dass** das Haltebauteil (11) in die Ringöffnung (12) eingreift, um den Sicherungsring (10) bzw. das Ringsegment (10a) gegen Verdrehen zu sichern.

8. Kupplung nach einem der vorstehenden Ansprüche, **dadurch gekennzeichnet, dass** das Haltebauteil (11) einen zwischen die Stirnseiten (13) des Ringsegments (10a) ragenden Haltebereich (16) aufweist.

9. Kupplung nach einem der vorstehenden Ansprüche, **dadurch gekennzeichnet, dass** der Haltebereich (16) für den Eingriff in die Ringöffnung (12) ausgebildet und entsprechend dimensioniert ist.

10. Kupplung nach einem der vorstehenden Ansprüche, **dadurch gekennzeichnet, dass** das Haltebauteil (11) einen Stützbereich (17) aufweist, wobei der Stützbereich (17) den Sicherungsring (10) an seinem Innenumfang (18) abstützt.

11. Kupplung nach einem der vorstehenden Ansprüche, **dadurch gekennzeichnet, dass** der Stützbereich (17) in Umfangsrichtung über den Haltebereich (16) hinausragt.

12. Kupplung nach einem der vorstehenden Ansprüche, **dadurch gekennzeichnet, dass** das Haltebauteil (11) in eine der Axialnuten (7) des Lamellenträgers (4) in Axialrichtung einschiebbar und/oder eingeclipst ist, insbesondere als eine Art Haltefeder (11a) ausgebildet ist.

13. Kupplung nach einem der vorstehenden Ansprüche, **dadurch gekennzeichnet, dass** das Haltebauteil (11) an den Querschnitt der Axialnut (7) angepasst ist.

14. Kupplung nach einem der vorstehenden Ansprüche, **dadurch gekennzeichnet, dass** das Haltebauteil (11) gegen axiales Verschieben abgestützt ist.

15. Kupplung nach einem der vorstehenden Ansprüche, **dadurch gekennzeichnet, dass** das Haltebauteil (11) an einem Zahn (6) der Mitnehmerscheibe (3) gegen axiales Verschieben abgestützt ist.

16. Kupplung nach einem der vorstehenden Ansprüche, **dadurch gekennzeichnet, dass** das Haltebauteil (11) eine am Zahn (6) der Mitnehmerscheibe eingehakte Lasche (19) aufweist.

## Claims

1. Clutch, in particular for a transmission of a motor vehicle, or double clutch (1) for an automatic or automated double-clutch transmission, with at least one friction clutch, the friction clutch being connectable or connected, on the one hand, to an engine shaft and, on the other hand, to a transmission input shaft, with at least one lamella carrier (4) and with a driving disc (3) engaged fixedly in terms of rotation with the lamella carrier (4), the lamella carrier (4) having an annular groove (9), and the driving disc (3) being secured to the lamella carrier (4) by means of a securing ring (10) engaging into the annular groove (9), and an anti-twist device protecting the securing ring (10) in the annular groove (9) against twisting, **characterized in that** the anti-twist device provided is a separate holding component (11), and the holding component (11) is additionally designed and/or arranged in such a way that the securing ring (10) is secured in the annular groove (9) against radial release from the annular groove (9) and/or against twisting in the circumferential direction.

2. Clutch according to Claim 1, **characterized in that**, on the one hand, the holding component (11) is arranged on the lamella carrier (4) and/or on the driving disc (3) and, on the other hand, the securing ring (10) is supported in the radial direction and in the circumferential direction by the holding component (11).

3. Clutch according to Claim 1 or 2, **characterized in that** the lamella carrier (4) has axial grooves (7), and the driving disc (3) has teeth (6) engaging into the axial grooves (7).

4. Clutch according to one of the preceding claims, **characterized in that** the securing ring (10) is designed as a ring segment (10a) having at least one ring orifice (12).

5. Clutch according to one of the preceding claims, **characterized in that** the ring segment (10a) is arranged so that the ring orifice (12) is arranged in alignment with the axial groove (7) of the lamella carrier (4) in the radial direction.

6. Clutch according to one of the preceding claims, **characterized in that** the holding component (11) engages into one of the axial grooves (7) of the lamella carrier (4).

7. Clutch according to one of the preceding claims, **characterized in that** the holding component (11) engages into the ring orifice (12) in order to secure the securing ring (10) or the ring segment (10a) against twisting.

8. Clutch according to one of the preceding claims, **characterized in that** the holding component (11) has a holding region (16) projecting between the end faces (13) of the ring segment (10a).

9. Clutch according to one of the preceding claims, **characterized in that** the holding region (16) is designed for engagement into the ring orifice (12) and is dimensioned correspondingly.

10. Clutch according to one of the preceding claims, **characterized in that** the holding component (11) has a supporting region (17), the supporting region (17) supporting the securing ring (10) on the inner circumference (18) of the latter.

11. Clutch according to one of the preceding claims, **characterized in that** the supporting region (17) projects beyond the holding region (16) in the circumferential direction.

12. Clutch according to one of the preceding claims, **characterized in that** the holding component (11) can be pushed and/or is snapped into one of the axial grooves (7) of the lamella carrier (4) in the axial direction, in particular is designed as a kind of holding spring (11a).

13. Clutch according to one of the preceding claims, **characterized in that** the holding component (11) is adapted to the cross section of the axial groove (7).

14. Clutch according to one of the preceding claims, **characterized in that** the holding component (11) is supported against axial displacement.

15. Clutch according to one of the preceding claims, **characterized in that** the holding component (11) is supported on a tooth (6) of the driving disc (3) against axial displacement.

16. Clutch according to one of the preceding claims, **characterized in that** the holding component (11) has a tab (19) hooked on the tooth (6) of the driving disc.

## Revendications

1. Embrayage, notamment pour une boîte de vitesses d'un véhicule automobile, de préférence double embrayage (1) pour une boîte de vitesses à double embrayage automatique ou automatisée, comprenant au moins un embrayage à friction, l'embrayage à friction pouvant être connecté ou étant connecté d'une part à un arbre de moteur et d'autre part à un arbre d'entrée de boîte de vitesses, au moins un support de lamelles (4) et un disque d'entraînement (3) en prise solidaire en rotation avec le support de lamelles (4), le support de lamelles (4) présentant une rainure annulaire (9) et le disque d'entraînement (3) étant fixé au support de lamelles (4) par une bague de fixation (10) venant en prise dans la rainure annulaire (9), et une fixation en rotation fixant la bague de fixation (10) dans la rainure annulaire (9) pour l'empêcher de tourner, **caractérisé en ce que** l'on prévoit comme fixation en rotation un composant de retenue séparé (11) et le composant de retenue (11) est réalisé et/ou disposé en outre de telle sorte que la bague de fixation (10) soit fixée pour l'empêcher de ressortir radialement hors de la rainure annulaire (9) et/ou de tourner dans le sens périphérique dans la rainure annulaire (9).

2. Embrayage selon la revendication 1, **caractérisé en ce que** le composant de retenue (11) est disposé d'une part sur le support de lamelles (4) et/ou sur le disque d'entraînement (3), et d'autre part la bague de fixation (10) est supportée dans la direction radiale et dans la direction périphérique par le composant de retenue (11).

3. Embrayage selon la revendication 1 ou 2, **caractérisé en ce que** le support de lamelles (4) présente des rainures axiales (7) et le disque d'entraînement (3) présente des dents (6) venant en prise dans les rainures axiales (7).

4. Embrayage selon l'une quelconque des revendications précédentes, **caractérisé en ce que** la bague de fixation (10) est réalisée sous forme de segment annulaire (10a) avec au moins une ouverture annulaire (12).

5. Embrayage selon l'une quelconque des revendications précédentes, **caractérisé en ce que** le segment annulaire (10a) est disposé de telle sorte que l'ouverture annulaire (12) soit disposée dans la direction radiale en alignement avec la rainure axiale (7) du support de lamelles (4).

6. Embrayage selon l'une quelconque des revendications précédentes, **caractérisé en ce que** le composant de retenue (11) vient en prise dans l'une des rainures axiales (7) du support de lamelles (4).

7. Embrayage selon l'une quelconque des revendications précédentes, **caractérisé en ce que** le composant de retenue (11) vient en prise dans l'ouverture annulaire (12), afin de fixer la bague de fixation (10) ou le segment annulaire (10a) pour l'empêcher de tourner.

8. Embrayage selon l'une quelconque des revendications précédentes, **caractérisé en ce que** le composant de retenue (11) présente une région d retenue (16) saillant entre les côtés frontaux (13) du segment annulaire (10a).

9. Embrayage selon l'une quelconque des revendications précédentes, **caractérisé en ce que** la région de retenue (16) est réalisée pour venir en prise dans l'ouverture annulaire (12) et est dimensionnée en conséquence.

10. Embrayage selon l'une quelconque des revendications précédentes, **caractérisé en ce que** le composant de retenue (11) présente une région de support (17), la région de support (17) supportant la bague de fixation (10) au niveau de sa périphérie intérieure (18).

11. Embrayage selon l'une quelconque des revendications précédentes, **caractérisé en ce que** la région de support (17) dépasse dans la direction périphérique au-delà de la région de retenue (16).

12. Embrayage selon l'une quelconque des revendications précédentes, **caractérisé en ce que** le composant de retenue (11) peut être enfoncé et/ou enclipsé dans la direction axiale dans l'une des rainures axiales (7) du support de lamelles (4), notamment est réalisé sous forme de ressort de retenue (11a).

13. Embrayage selon l'une quelconque des revendications précédentes, **caractérisé en ce que** le composant de retenue (11) est adapté à la section transversale de la rainure axiale (7).

14. Embrayage selon l'une quelconque des revendications précédentes, **caractérisé en ce que** le composant de retenue (11) est supporté contre tout déplacement axial.

15. Embrayage selon l'une quelconque des revendications précédentes, **caractérisé en ce que** le composant de retenue (11) est supporté sur une dent (6) du disque d'entraînement (3) contre tout déplacement axial.

16. Embrayage selon l'une quelconque des revendications précédentes, **caractérisé en ce que** le composant de retenue (11) présente une patte (19) accrochée à une dent (6) du disque d'entraînement.
